## Europäisches Patentamt

## European Patent Office

## Office européen des brevets

(11) Veröffentlichungsnummer: **0 121 790**
**B1**

(12) # EUROPÄISCHE PATENTSCHRIFT

(45) Veröffentlichungstag der Patentschrift:
02.08.89

(51) Int. Cl.⁴: **G 01 L 23/22**

(21) Anmeldenummer: **84102570.3**

(22) Anmeldetag: **09.03.84**

(54) **Verfahren und Vorrichtung zur Klopferkennung mit Digitalfilter.**

(30) Priorität: **10.03.83 DE 3308541**

(43) Veröffentlichungstag der Anmeldung:
**17.10.84 Patentblatt 84/42**

(45) Bekanntmachung des Hinweises auf die Patenterteilung:
**02.08.89 Patentblatt 89/31**

(84) Benannte Vertragsstaaten:
**DE FR GB**

(56) Entgegenhaltungen:
**DE-A-3 010 324**
**DE-A-3 137 016**
**US-A-4 012 942**

(73) Patentinhaber: **ROBERT BOSCH GMBH, Postfach 50, D-7000 Stuttgart 1 (DE)**

(72) Erfinder: **Bonitz, Jörg, Dipl.- Ing., Marsstrasse 19, D-7130 Mühlacker (DE)**
Erfinder: **Entenmann, Robert, Ing. grad., Beihingerweg 15, D-7141 Benningen (DE)**
Erfinder: **Miller, Bernhard, Hasenbergsteige 72, D-7000 Stuttgart 1 (DE)**
Erfinder: **Rohde, Siegfried, Dr.- Ing., Memelweg 1, D-7141 Schwieberdingen (DE)**
Erfinder: **Unland, Stefan, Dipl.- Ing., Reichertshalde 96, D-7140 Ludwigsburg (DE)**
Erfinder: **Viess, Walter, Dipl.- Ing., Memelweg 1, D-7141 Schwieberdingen (DE)**

LIBER, STOCKHOLM 1989

EP 0 121 790 B1

**Beschreibung**

Die Erfindung geht aus von einem Verfahren nach der Gattung des Anspruchs 1 bzw. von einer Vorrichtung nach der Gattung des Anspruchs 5, bzw. von einem Verfahren nach der Gattung der Ansprüche 8 oder 2.

Es ist bekannt, daß unter bestimmten Betriebsbedingungen einer Brennkraftmaschine das sogenannte Klopfen auftreten kann. Hierunter versteht man Stoßwellen des Kraftstoff-Luft-Gemisches, die sich u.a. als tonfrequente Schwingungen des Motors bemerkbar machen. Da mit dem Klopfen in der Regel eine starke thermische Belastung der brennraumseitigen Wandung des Zylinders und des Kolbens einhergeht, wobei Materialabtragungen auftreten können, ist man bestrebt, das Klopfen grundsätzlich zu vermeiden, da es bei längerem Auftreten zu einer Zerstörung der Brennkraftmaschine führen kann. Da man jedoch andererseits bestrebt ist, den bestehenden Arbeitsbereich der Brennkraftmaschine (in Hinsicht auf Drehmoment- oder Verbrennungsoptimum) möglichst weitgehend auszunutzen, besteht ein Bedürfnis, das Klopfen der Brennkraftmaschine möglichst frühzeitig und sicher zu erkennen. Neben dem Problem, zur Erfassung des Klopfens geeignete Geber bereitzustellen, besteht auch das meßtechnische Problem, aus den vom Geber erfaßten Schwingungen der Brennkraftmaschine das Klopfsignal zuverlässig und störungsfrei herauszulesen, um die Brennkrafmaschine in Abhängigkeit von einem Klopferkennungssignal "Klopfen ja" oder "Klopfen nein" entsprechend regeln zu können.

Aus der DE-OS-3 010 324 ist eine Vorrichtung zum Erkennen des Klopfens bei Brennkraftmaschinen bekannt, bei dem ein dem Klopfen zugeordnetes Nutzsignal mit einem Referenzsignal verglichen wird und aus dem Vergleichsergebnis ein Vorliegen von Klopfen erkannt wird. Dabei wird zur Verringerung von Störeinflüssen das Nutzsignal während eines Meßfensters integriert, eine Intgeration des zur Referenzsignalbildung verwendeten Signals ist dagegen nicht vorgesehen.

Aus der DE-OS-3 137 016 ist ein Verfahren und eine Vorrichtung zur Erkennung des Klopfens bei Brennkraftmaschinen bekannt, bei dem ein dem Klopfen zugeordnetes Nutzsignal mit einem Referenzsignal verglichen wird. Das Referenzsignal wird dabei nach der Art einer Ausgangsfolge eines Digitalfilters gebildet, und stellt insbesondere eine rekursive Funktion aus momentanem Nutzsignalvert und momentanem Referenzsignalwert dar. Für ein als gültig erkanntes Klopfen wird dann ein Referenzsignal abgegeben, wenn das Nutzsignal das Referenzsignal in vorgegebener Weise überschreitet. Ein Problem bei einem solchen Verfahren bzw. bei einer solchen Vorrichtung ist es, daß bei Ausfall der Nutzsignalerfassung keine Fehlererkennung möglich ist, was bei einer nachfolgenden Klopfregelung etwa durch dauernde Vorverstellung des Zündzeitpunktes zu einer Zerstörung der Brennkraftmaschine führen kann.

In der US-PS-4 012 942 ist weiterhin ein Klopfdetektor beschrieben, bei dem das gemessene Klopfsignal mit einem Referenzsignal verglichen wird, das über einen Funktionsgenerator in Abhängigkeit von der Motordrehzahl erzeugt wird. Dieses Verfahren hat jedoch den Nachteil, daß ebenvalls das tatsächlich auftretende Hintergrundgeräusch der Brennkraftmaschine nicht mit einbezogen wird. Damit wird insbesondere keine Rücksicht auf die jeweilige Betriebsweise, die Einstellung und den Alterungszustand der Brennkraftmaschine genommen.

**Vorteile der Erindung**

Die erfindungsgemäßen Verfahren mit den kennzeichnenden Merkmalen des Anspruchs 8 oder 12, und die erfindungsgemäße Vorrichtung mit den kennzeichnenden Merkmalen des Anspruchs 5 haben demgegenüber den Vorteil, daß die Klopferkennung mit größerer Sicherheit durchgeführt werden kann. Sich langsam aufbauenden Störpegel, z. B. durch Ventilgeräusche im Meßfenster, wirken sich nicht störend auf die Klopferkennung aus, da sich das Referenzsignal diesen langsamen Amplitudenänderungen anpaßt.

Durch die in den abhängigen Ansprüchen aufgeführten Maßnahmen sind vorteilhafte Ausgestaltungen des erfindungsgemäßen Verfahrens bzw. der Vorrichtung möglich. Insbesondere ist es vorteilhaft, die Integratorwerte zeitlich aufeinanderfolgend und/oder pro Verbrennungszyklus untereinander laufend zu vergleichen. Überschreitet dabei ein Differenzbetrag einen vorgegebenen Wert, so ist eine Aussage möglich, daß ein Fehler - etwa ein Abfallen einer Klopfsensorzuleitung - aufgetreten ist, und eine Gefährdung der Brennkraftmaschine durch eine fehlerhafte Klopfregelung ist damit wirksam verhinderbar. Dabei gilt als weiterer Vorteil, daß die Fehleraussage keinerlei weitere Hardware voraussetzt, so daß eine rein programmtechnische Realisierung in der Ablaufsteuerung möglich ist.

**Zeichnung**

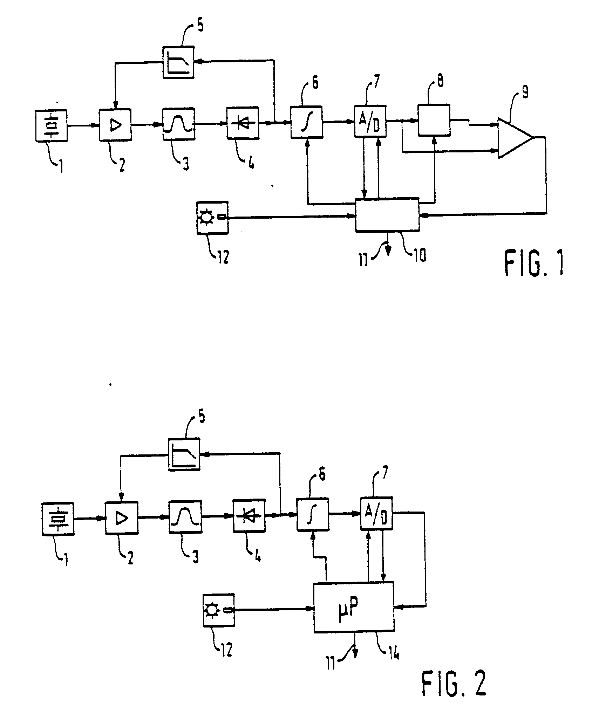

Die erfindungsgemäße Vorrichtung ist in der Zeichnung dargestellt und in der nachfolgenden Beschreibung näher erläutert. Es zeigen Figur 1 die schaltungsgemäße Ausgestaltung eines ersten Ausführungsbeispiels und Figur 2 die schaltungsgemäße Ausgestaltung eines zweiten Ausführungsbeispiels.

## Beschreibung der Ausführungsbeispiele

Bei dem in Figur 1 dargestellten Ausführungsbeispiel ist ein Klopfsensor 1 über einen Regelverstärker 2 und einen Bandpass 3 an eine Demodulatorschaltung 4 angeschlossen. Der Ausgang der Demodulatorschaltung 4 ist einerseits über einen Regler 5 mit dem Regelverstärker 2 und andererseits mit einem Integrator 6 verbunden, dessen Ausgang einem Analog-Digital-Wandler 7 zugeführt ist. Der Ausgang des Analog-Digital-Wandlers 7 ist einerseits an ein Digitalfilter 8 und andererseits an einen Eingang einer Vergleichseinrichtung 9, die vorzugsweise als digitaler Komparator ausgebildet ist, angeschlossen. Das Digitalfilter 8 ist mit einem weiteren Eingang der Vergleichseinrichtung 9 verbunden. Integrator 6, Analog-Digital-Wandler 7 und Digitalfilter 8 werden von einer Ablaufsteuerung 10, vorzugsweise in Form eines Mikroprozessors, angesteuert. Die Ablaufsteuerung 10 liefert an einem Ausgang 11 ein Erkennungssignal "Klopfen ja/nein". Außerdem empfängt sie Steuersignale von der Vergleichseinrichtung 9 und von einem Drehzahlgeber 12, vorzugsweise einem Motordrehzahlgeber.

Die Wirkungsweise der in Figur 1 dargestellten Vorrichtung ist wie folgt; Die von Klopfsensor 1 abgegebenen Signale werden in dem Regelverstärker 2 verstärkt und dem Bandpass 7 zugeleitet, der die Klopfsignale gegenüber anderen Geräuschen (Frequenzen) bevorzugt zu der Demodulatorschaltung 4, die als Gleichrichter ausgebildet sein kann, weiterleitet. In dem Regler 5, der im wesentlichen aus einem Tiefpass besteht, wird aus dem demodulierten Signal eine Stellgröße derart gebildet, daß die Verstärkung des Regelverstärkers bei großen vom Klopfsensor 1 gelieferten Signalen klein ist und bei kleinen vom Klopfsensor 1 gelieferten Signalen groß ist (automatische Verstärkungsregelung). Durch die Regelung des Verstärkungsfaktors wird erreicht, daß das Ausgangssignal des Regelverstärkers 2 bzw. der Demodulatorschaltung 4 weitgehend konstant und unabhängig von der Motordrehzahl ist, da die Signalamplitude des Klopfsensors 1 mit der Motordrehzahl zunimmt.

In dem Integrator 6 wird während eines kurbelwellensynchronen Meßfensters die Ausgangsspannung der Demodulatorschaltung 4 von Null beginnend integriert. Das Meßfenster wird in Abhängigkeit vom Drehzahlgeber 12 von der Ablaufsteuerung 10 gebildet, die dem Meßfenster entsprechend den Integrator 6 ansteuert. Mit dem Ende des Meßfensters wird die Ausgangsspannung des Integrators 6 in dem Analog-Digital-Wandler 7 digitalisiert, wobei die Ablaufsteuerung 10 den Befehl zum Wandeln abgibt und ein das Ende der Wandlung anzeigendes Signal vom Analog-Digital-Wandler 7 empfängt. Die Zahlenfolge am Ausgang des Analog-Digital-Wandler 7 wird auf den Eingang des Digitalfilters 8 gegeben, das als Digitalfilter erster Ordnung mit einem Tiefpassverhalten ausgebildet ist. Das Digitalfilter 8 liefert darauf eine Ausgangsfolge, deren Werte in der Vergleichseinrichtung 9 mit dem vom Analog-Digital-Wandler 7 digitalisieren aktuellen Meßwert verglichen wird.

Das Ausführungsbeispiel in Figur 2 unterscheidet sich von dem Ausführungsbeispiel in Figur 1 dadurch, daß das Digitalfilter 8 von einer Recheneinheit 14, die als Mikrocontroller ausgebildet ist, nachgebildet wird und die Vergleichseinrichtung 9 in der Recheneinheit 14 enthalten ist. Der Analog-Digital-Wandler 7 liefert an die Recheneinheit 14 den digitalisierten Meßwert. Durch einen Zählvorgang innerhalb der Recheneinheit 14 entsprechend der Zylinderzahl, der in Abhängigkeit von der Zylindererkennung durchgeführt wird, werden die digitalisierten Ausgangssignale des Analog-Digital-Wandlers 7 den Zylindern entsprechend je einem, jedem einzelnen Zylinder individuell zugeordneten, Speicher zugeführt.

Das Referenzsignal, das für jeden einzelnen vom Klopfsensor gelieferten Meßwert neu bestimmt wird, wird durch schaltungstechnische Maßnahmen im Digitalfilter 8 gemäß Figur 1 oder durch die Recheneinheit 14 gemäß Figur 2 nach Art eines digitalen Filters entsprechend der Formel

$$y(t_i) = (1-k) \cdot y(t_{i-1}) + kx(t_i)$$

gewonnen, wobei $y(t_i)$ der jeweilige berechnete Referenzwert ist, i der Zählindex der Verbrennungszyklen eines einzelnen Zylinders bedeutet, $x(t_i)$ den vom Analog-Digital-Wandler 7 an die Recheneinheit 8 abgegebenen, digitalisierten Meßwert darstellt und k der Faktor ist, mit dem der aktuelle Meßwert zur Bildung des neuen Heferenzwertes gewichtet wird. Der Faktor k wird empirisch in Abhängig der Drehzahlbeschleunigung $(d\omega/dt)$ gebildet, und durch die Anzahl der Shifts (Verschiebungen) des aktuellen Meßwertes $x(t_i)$ in einem Register der Recheneinheit 14 festgelegt, wodurch dieser jeweils durch 2 dividiert wird, d.h. k kann z. B. 0,5; 0,25; 0,125 usw. betragen. Der aktuelle Meßwert $x(t_i)$ wird in der Vergleichseinrichtung 9 bzw. in der Recheneinheit 14 mit dem entsprechenden Referenzwert $y(t_i)$ verglichen und daraufhin untersucht, ob er um einen wählbaren Faktor m größer als der Referenzwert ist. Im zutreffenden Fall wird die Verbrennung als Klopfen gewertet, was das Signal 11 entsprechend angibt.

Zur Vermeidung von Falscherkennungen ist ein minimaler Referenzpegel in der Recheneinheit 14 als Funktion der Drehzahl abgespeichert. Sinkt der Referenzwert unter diesen minimalen Referenzpegel, so wird für den Vergleich mit dem Meßwert der minimale Referenzpegel anstatt des Referenzwerter herangezogen. Liegt während des Betriebes der Brennkraftmaschine eine Drehzahl vor, die im Bereich um eine bestimmte Drehzahl liegt, z. B. 3000 ± 250 U/min, so werden die Meßwerte gespeichert. Diese sind im allgemeinen zylinderspezifisch verschieden. Daraufhin werden in der Recheneinheit 14 die minimalen Referenzpegel so angehoben oder abgesenkt, d.h. mit einem Faktor bewertet, daß sich die minimalen Referenzpegel untereinander proportional sich so verhalten wie die Referenzwerte untereinander. Damit ist eine Selbstadaption der minimalen Referenzpegel an zylinderspezifisch unterschiedliche Grundgeräuschpegel erreicht. Diese Adaption wird durchgeführt in Abständen von jeweils 1000 Verbrennungszyklen und in Abhängigkeit von bestimmten Betriebsparametern der Brennkraftmaschine z. B. im Startfall und häufiger bei hohen Temperaturen.

Das Erkennen von klopfenden Verbrennungen erfolgt zylinderspezifisch, wobei die in den Speichern gespeicherten, den Zylindern entsprechenden, Referenzwerte abgerufen werden und abhängig von dem aktuellen Meßwert neu gewonnen werden. Mit Hilfe des Klopferkennungsignals 11 kann für jeden Zylinder der Zündzeitpunkt individuell bestimmt werden, so daß der klopfenden Verbrennung in dem jeweiligen Zylinder abgeholfen werden kann. Für den Referenzwert kann, wie oben ausgeführt, die Ausgangsfolge $y(t_i)$ herangezogen werden, es kann aber auch der Wert $y(t_{i-1})$ verwendet werden, bei dem dann der aktuelle Meßwert nicht in der Ausgangsfolge enthalten ist. Weiter ist es möglich, falls $y(t_{i-1})$ zur Klopferkennung herangezogen wurde und der entsprechende Meßwert $x(t_{i-1})$ als klopfende Verbrennung erkannt wurde, den aktuellen Meßwert $x(t_i)$ bei der Bildung des neuen Referenzwertes $y(t_i)$ zu unterdrücken oder ihn nur mit einem bestimmten Bruchteil zu übernehmen. Das kann z. B. dadurch geschehen, daß der Faktor k für diesen betreffenden Meßwert gleich Null oder kleiner als Eins, etwa k = 1/m, gesetzt wird. Durch diese Maßnahme wird verhindert, daß der Referenzwert bei klopfender Verbrennung unverhältnismäßig stark ansteigt.

Während des Betriebes der Brennkraftmaschine in einem Drehzahlbereich zwischen 600 U/min und 1500 U/min werden die aktuellen Integratorwerte untereinander laufend verglichen, d.h, es wird laufend eine Differenz der aufeinanderfolgenden Integratorwerte gebildet. Zu Beginn dieser Differenzbildung, etwa nach dem Start, sei ein Zähler in der Recheneinheit 14 auf den Anfangswert 100 gesetzt. Unterschreitet nun ein Differenzbetrag einen vorgegebenen minimalen Differenzbetrag, so wird der Zähler dekrementiert; wenn nicht, dann wird der Zähler wider mit 100 geladen. Wird durch die Dekrementierung des Zählers der Zählerstand 0 erreicht, so wird ein Sicherheitsprogramm in der Recheneinheit 14 aktiviert, das etwa durch Spätverstellung des Zündzeitpunktes einen für alle Betriebsfälle unschädlichen Betriebszustand der Brennkraftmaschine gewährleistet.

Tritt etwa ein Ausfall im Regelverstärker 2 auf, dann werden die Integratorwerte aufeinanderfolgend immer den gleichen Wert zeigen, sicht etwa immer am oberen Versorgungspotential befinden. Nach hundert Verbrennungen ist dann der Zählerstand 0 erreicht und das Sicherheitsprogramm wird aktiviert. Im normalen Betriebszustand wird durch unterschiedliches Zylinderverhalten und die Regelfunktion der Klopfregelung gewährleistet sein, daß Differenzbeträge auftreten, die den vorgegebenen minimalen Differenzbetrag überschreiten, so daß der Zähler wieder geladen wird.

Diese Überwachungsfunktion ist in der Software der Ablaufsteuerung 10 oder der Recheneinheit 14 implementiert und benötigt keinerlei weitere Hardware-Maßnahmen wie etwa Überwachungsleitungen oder Testleitungen, die ein Sensorsignal simulieren wurden. Die Überwachung geschieht vom Start weg und jedesmal, wenn sich die Brennkraftmaschine in der Nähe ihrer Leerlauf-Nenndrehzahl befindet, so daß eine ausreichend häufige Überwachung stattfindet. Die Rückladung des Zählers, etwa mit 100, bewirkt, daß nicht etwa zufällig aufeinanderfolgende Differenzbeträge, die kleiner sind als der minimale Differenzbetrag, zu einer falschen Aktivierung des Sicherheitsprogrammes führen.

**Patentansprüche**

1. Verfahren zur Klopferkennung mit Digitalfilter, bei dem aus den demodulierten Klopfsignalen während eines einstellbaren Meßfensters ein Integratorwert $x(t_i)$ des Nutzsignals gebildet wird, der in einem Analog-Digital-Wandler digitalisiert wird und zur Bildung eines Referenzsignals $y(t_i)$ in einem Digitalfilter gefiltert wird, wobei die Bildung des Referenzsignals im Digitalfilter rekursiv und aus einem mit einem Faktor gewichteten Integratorwert erfolgt, und bei dem dann ein Klopfsignal abgegeben wird, wenn der dem Klopfvorgang zugeordnete Integratorwert des Nutzsignals das Referenzsignal in vorgegebener Weise überschreitet, dadurch gekennzeichnet, daß der Faktor von der Drehzahlbeschleunigung der Brennkraftmaschine abhängt.

2. Verfahren nach Anspruch 1, dadurch gekennzeichnet, daß das Referenzsignal entsprechend der Formel

$$y(t_i) = (1-k) \cdot y(t_{i-1}) + k \cdot x(t_i)$$

gebildet wird, bei der i der Zählindex der Verbrennungszyklen eines einzelnen Zylinders, und k der Faktor ist, mit dem der momentane Integratorvert zur Bildung des neuen Referenzwertes gewichtet wird.

3. Verfahren nach Anspruch 2, dadurch gekennzeichnet, daß für die Bildung des Erkennungssignals die Ausgangs folge $y(t_{i-1})$ herangezogen wird, so daß die Werte des momentanen Verbrennungszyklus nicht im Referenzsignal enthalten sind.

4. Verfahren nach einem der vorhergehenden Ansprüche, dadurch gekennzeichnet, daß bei erkannter klopfender Verbrennung der Integratorwert des nächsten Verbrennungszyklus nicht oder hur zum Teil zur Referenzsignalbildung herangezogen wird.

5. Vorrichtung zur Durchführung des Verfahrens nach einem der vorhergehenden Ansprüche 1 bis 3, mit einem Klopfsensor, einer Demodulatorschaltung zur Gewinnung des zeitlichen Amplitudenverlaufs des Klopfsignals und einer Vergleichseinrichtung zum Vergleich des Nutzsignals mit dem Referenzsignal, mit einem, der Demodulatorschaltung nachgeschalteten, von einer Ablaufsteuerung gesteuerten Integrator, wobei der Ablaufsteuerung Drehzahlsignale zugeführt sind, dadurch gekennzeichnet, daß dem Integrator (6) ein von der Ablaufsteuerung (10, 14) gesteuerten Analog-Digital-Wandler (7) nachgeschaltet ist, daß dem Analog-Digital-Wandler (7) ein vorzugsweise als Recheneinheit ausgebildetes Digitalfilter (8, 14) nachgeschaltet ist und daß die Vergleichseinrichtung (9, 14) die das Referenzsignal bildende Ausgangs folge des Digitalfilters (8, 14) in Abhängigkeit von der Ablaufsteuerung (10, 14) mit dem als Nutzsignal dienenden digitalisierten Wert des Integrators (6) vergleicht.

6. Vorrichtung nach Anspruch 5, dadurch gekennzeichnet, daß für jeden Zylinder individuell die Klopferkennung durchgeführt wird, wobei die den jeweiligen Zylindern entsprechenden Referenzsignale jeweils in einem in der Recheneinheit (14) vorgesehenen Speicher gespeichert werden.

7. Vorrichtung nach Anspruch 5 oder 6, dadurch gekennzeichnet, daß der Faktor k durch die Anzahl der Shifts (Verschiebung) des Integratorwertes in einem Register der Recheneinheit (14) festgelegt wird.

8. Verfahren zur Klopferkennung mit Digitalfilter, bei dem aus den demodulierten Klopfsignalen während eines einstellbaren Meßfensters ein Integratorwert des Nutzsignals gebildet wird, der in einem Analog-Digital-Wandler digitalisiert wird und nach der Filterung in einem Digitalfilter das Referenzsignal darstellt, und bei dem dann ein Klopfsignal abgegeben wird, wenn der dem Klopfvorgang zugeordnete Integratorwert des Nutzsignals das Referenzsignal in vorgegebener Weise überschreitet, dadurch gekennzeichnet, daß ein minimales Referenzsignal vorgesehen ist, das dann angenommen wird, wenn sich das Referenzsignal unterhalb diesem minimalen Referenzsignal befindet.

9. Verfahren nach Anspruch 8, dadurch gekennzeichnet, daß das minimale Referenzsignal eine Funktion der Drehzahl der Brennkraftmaschine ist.

10. Verfahren nach Anspruch 8 oder 9, dadurch gekennzeichnet, daß zylinderspezifisch je ein minimales Referenzsignal vorgesehen ist, und daß sich die minimalen Referenzsignale zylinderspezifisch untereinander so verhalten, wie die Referenzsignale.

11. Verfahren nach einem der Ansprüche 8 bis 10, dadurch gekennzeichnet, daß das minimale Referenzsignal zu vorgegebenen Zeitperioden oder nach einer vorgegebenen Anzahl von Zündvorgängen oder in Abhängigkeit von Betriebsparametern, vorzugsweise der Temperatur, angenommen wird, wenn sich das Referenzsignal unterhalb diesem minimalen Referenzsignal befindet.

12. Verfahren zur Klopferkennung mit Digitalfilter, bei dem aus den demodulierten Klopfsignalen während eines einstellbaren Meßfensters ein Integratorwert des Nutzsignals gebildet wird, der in einem Analog-Digital-Wandler digitalisiert wird und nach der Filterung in einem Digitalfilter das Referenzsignal darstellt, und bei dem dann ein Klopfsignal abgegeben wird, wenn der dem Klopfvorgang zugeordnete Integratorwert des Nutzsignals das Referenzsignal in vorgegebener Weise überschreitet, dadurch gekennzeichnet, daß fortlaufende Differenzbeträge der Integratorwerte gebildet werden, daß ein minimaler Differenzbetrag vorgesehen ist, und daß ab einer vorgegebenen Anzahl von Unterschreitungen der Differenzbeträge unter den minimalen Differenzbetrag eine Sicherheitsfunktion aktiviert wird, die einen für alle Betriebsfälle der Brennkraftmaschine sicheren Betriebszustand gewährleistet.

13. Verfahren nach Anspruch 12, dadurch gekennzeichnet, daß Differenzbeträge innerhalb eines vorgegebenen Drehzahlbereiches der Brennkraftmaschine, vorzugsweise im Bereich der Leerlauf-Nenndrehzahl, gebildet werden.

**Claims**

1. Method for the recognition of knocking with a digital filter, whereby an integrator value $x(t_i)$ of the useful signal is formed from the demodulated knocking signals during an adjustable measuring window, is digitalised in an analog/digital converter and is filtered in a digital filter to form a reference signal $y(t_i)$, the formation of the reference signal in the digital filter occurring recursively and from an integrator value weighted with a factor, and a knocking signal then being delivered when the integrator value of the useful signal associated with the knocking process exceeds the reference signal in a prescribed manner, characterized in that the factor is a function of the speed acceleration of the internal-combustion engine.

2. Method according to Claim 1, characterized in that the reference signal is formed in accordance with the formula

$$y(t_i) = (1-k) \cdot y(t_{i-1}) + k \cdot x(t_i)$$

where i is the counting index of the combustion cycles of a single cylinder and k is the factor with which the instantaneous integrator value is weighted in order to form the new reference value.

3. Method according to Claim 2, characterized in that the output series $y(t_{i-1})$ is used for the formation of the recognition signal, so that the values of the instantaneous combustion cycle are not included in the reference signal.

4. Method according to one of the previous Claims, characterized in that when knocking combustion is recognized the integrator value of the next combustion cycle is not, or is only partly used for the reference signal formation.

5. Device for performing the method according to one of the previous Claims 1 to 3, with a knock sensor, a demodulator circuit to obtain the curve of amplitude over time of the knocking signal, and a comparison device to compare the useful signal with the reference signal, with an integrator following the demodulator circuit and controlled by a sequence controller, speed signals being fed to the sequence controller, characterized in that an analog/digital converter (7) controlled by the sequence controller (10, 14) follows the integrator (6), that a digital filter (8, 14), preferably constructed as an arithmetic unit, follows the analog/digital converter (7), and that the comparison device (9, 14) compares the output series of the digital filter (8, 14) which forms the reference signal with the digitalised value of the integrator (6) which serves as the useful signal as a function of the sequence controller (10, 14).

6. Device according to Claim 5, characterized in that the recognition of knocking is performed for each cylinder individually, the reference signals corresponding to the respective cylinders being respectively stored in a memory provided in the arithmetic unit (14).

7. Device according to Claim 5 or 6, characterized in that the factor k is determined by the number of shifts of the integrator value in a register of the arithmetic unit (14).

8. Method for the recognition of knocks with a digital filter, in which method an integrator value of the useful signal is formed from the demodulated knocking signals during an adjustable measuring window, is digitalised in an analog/digital converter and constitutes the reference signal after filtration in a digital filter, and in which a knocking signal is then delivered if the integrator value of the useful signal associated with the knocking process exceeds the reference signal in a predetermined manner, characterized in that a minimum reference signal is provided which is assumed when the reference signal is below said minimum reference signal.

9. Method according to Claim 8, characterized in that the minimum reference signal is a function of the speed of the internal-combustion engine.

10. Method according to Claim 8 or 9, characterized in that a minimum reference signal is provided for each specific cylinder, and that the minimum reference signals for each cylinder are in the same proportion among themselves as the reference signals.

11. Method according to one of Claims 8 to 10, characterized in that the minimum reference signal is assumed at predetermined periods of time or after a predetermined number of ignition processes or as a function of operating parameters, preferably the temperature, when the reference signal is below said minimum reference signal.

12. Method for the recognition of knocking with a digital filter, in which method an integrator value of the useful signal is formed from the demodulated knocking signals during an adjustable measuring window, is digitalised in an analog/digital converter and constitutes the reference signal after filtration in a digital filter, and in which a knock signal is then delivered when the integrator value of the useful signal associated with the knocking process exceeds the reference signal in a predetermined manner, characterized in that continual difference amounts of the integrator values are formed, that a minimum difference amount is provided, and that above a predetermined number of falls of the difference amounts below the minimum difference amount a safety function is activated which ensures a safe operating state for all operating cases of the internal-combustion engine.

13. Method according to Claim 12, characterized in that difference amounts are formed within a predetermined speed range of the internal-combustion engine, preferably in the region of the nominal no-load speed.

**Revendications**

1. Procédé pour l'identification du cognement avec un filtre numérique, procédé dans lequel, à partir des signaux de cognement démodulés, une valeur d'intégration $x(t_i)$ du signal utile est formée pendant une fenêtre de mesure réglable, cette valeur étant mise sous forme numérique dans un convertisseur analogique-numérique et étant filtrée dans un filtre numérique afin de former un signal de référence $y(t_i)$, la formation du signal de référence dans le filtre numérique s'effectuant de façon récursive et à partir d'une valeur d'intégration pondérée par un facteur, et un signal de cognement étant délivré lorsque la valeur d'intégration du signal utile, associée au processus de cognement, dépasse d'une façon prédéfinie le signal de référence, procédé caractérisé en ce que le facteur dépend de l'accélération de la vitesse de rotation du moteur à combustion interne.

2. Procédé selon la revendication 1, caractérisé en ce que le signal de référence est formé de façon correspondante à la formule

$$y(t_i) = (1-k) \cdot y(t_{i-1}) + k \cdot x(t_i)$$

dans laquelle i est l'index de comptage des cycles de combustion d'un cylindre donné, et x le facteur par lequel est pondérée la valeur d'intégration momentanée pour former la nouvelle valeur de référence.

3. Procédé selon la revendication 1, caractérisé en ce que pour la formation du signal d'identification, il est fait appel à la succession de sortie $y(t_{i-1})$, de sorte que les valeurs du cycle de combustion du moment ne sont pas contenues dans le signal de référence.

4. Procédé selon une des précédentes revendications, caractérisé en ce que, lorsqu'une combustion avec cognement est identifiée, il n'est pas fait appel, ou il n'est fait appel que partiellement, pour la formation du signal de référence, à la valeur d'intégration du prochain cycle de combustion.

5. Dispositif pour la mise en oeuvre du procédé selon une des précédentes revendications 1 à 3, avec un détecteur de cognement, un circuit démodulateur pour obtenir l'évolution dans le temps des amplitudes du signal de cognement, et un moyen de comparaison pour comparer le signal utile avec le signal deréférence, et avec un intégrateur branché à la suite du circuit démodulateur et commandé par une commande séquentielle à laquelle sont appliqués des signaux de vitesse de rotation, dispositif caractérisé en ce qu'à la suite de l'intégrateur (6) est branché un convertisseur analogique-numérique (7) commandé par la commande séquentielle (10, 14), un filtre numérique (8, 14), réalisé de préférence sous la forme d'une unité de calcul, étant branché à la suite de ce convertisseur analogique-numérique (7), et le moyen de comparaison (9, 14) comparant la succession à la sortie du filtre numérique (8, 14) formant le signal de référence, en fonction de la commande séquentielle (10, 14) avec la valeur numérique de l'intégrateur (6), jouant le rôle de signal utile.

6. Dispositif selon la revendication 5, caractérisé en ce que l'identification du cognement est effectuée individuellement pour chaque cylindre, les signaux de référence correspondant au cylindre concerné étant respectivement stockés dans une mémoire prévue dans l'unité de calcul (14).

7. Dispositif selon la revendication 5 ou 6, caractérisé en ce que le facteur k est déterminé par le nombre des shifts (décalages) de la valeur d'intégration dans un registre de l'unité de calcul (14).

8. Procédé pour l'identification du cognement avec un filtre numérique, procédé dans lequel à partir des signaux de cognement démodulés, une valeur d'intégration du signal utile est formée pendant une fenêtre de mesure réglable, cette valeur étant mise sous forme numérique dans un convertisseur analogique-numérique et constituant, après filtration dans un filtre numérique, le signal de référence, et un signal de cognement étant délivré lorsque la valeur d'intégration du signal utile, associée au processus de cognement, dépasse d'une façon prédéfinie le signal de référence, procédé caractérisé en ce qu'il est prévu un signal minimal de référence, qui est adopté lorsque le signal de référence se situe au-dessous de ce signal minimal de référence.

9. Procédé selon la revendication 8, caractérisé en ce que le signal minimal de référence est fonction de la vitesse de rotation du moteur à combustion interne.

10. Procédé selon la revendication 8 ou 9, caractérisé en ce qu'il est prévu un signal minimal de référence spécifique pour chaque cylindre et que les signaux minimaux de référence spécifiques pour chaque cylindre se comportent entre eux comme les signaux de référence.

11. Procédé selon une des revendications 8 à 10, caractérisé en ce que le signal minimal de référence est adopté pour des périodes de temps prédéfinies, ou après un nombre prédéfini de processus d'allumage, ou en fonction de paramètres de fonctionnement, de préférence la température, lorsque le signal de référence se situe au-dessous de ce signal minimal de référence.

12. Procédé pour l'identification du cognement avec un filtre numérique, procédé dans lequel, à partir des signaux de cognement démodulés, une valeur d'intégration du signal utile est formée pendant une fenêtre de mesure réglable, cette valeur étant mise sous forme numérique dans un convertisseur analogique-numérique et constituant, après filtration sur un filtre numérique, le signal de référence, et un signal de cognement étant délivré lorsque la valeur d'intégration du signal utile, associée au processus de cognement, depasse d'une façon prédéfinie le signal de référence, procédé caractérisé en ce qu'il est formé des valeurs absolues différentielles courantes des valeurs d'intégration, et en ce qu'il est prévu une valeur absolue différentielle minimale, et qu'à partir d'un nombre prédéfini de franchissements vers le bas de la valeur absolue différentielle minimale par les valeurs absolues différentielles, une fonction de sécurité est activée, cette fonction garantissant un état de fonctionnement correct du moteur à combustion interne dans tous les cas d'exploitation.

13. Procédé selon la revendication 12, caractérisé en ce que les valeurs absolues différentielles sont formées dans une gamme prédéfinie de vitesses de rotation du moteur à combustion interne, de préférence dans la gamme de la vitesse de rotation nominale de marche à vide.

FIG. 1

FIG. 2